# EUROPEAN PATENT SPECIFICATION

(11) **EP 1 600 239 B1**
(45) Date of publication and mention of the grant of the patent: **27.08.2008**
(21) Application number: 05011243.2
(22) Date of filing: 24.05.2005
(51) Int. Cl.: B23K 11/25, B23K 11/11, B23K 11/31, G05B 19/414, B25J 9/16

(54) **Resistance spot welding system including a master robot and at least one slave robot**
Widerstand-Punktschweisseinrichtung mit einem Master-Roboter und mindestens einem anderen Roboter
Système de soudage par resistance par points comprenant un robot maître et au moins un autre robot

(30) Priority: 27.05.2004 JP 2004157803
(43) Date of publication of application: 30.11.2005
(73) Proprietor: FANUC LTD, Minamitsuru-gun, Yamanashi 401-0597 (JP)
(72) Inventor: Kobayashi, Hirohiko, Fujiyoshida-shi Yamanashi 403-0004 (JP); Nagatsuka, Yoshiharu FANUC Dia3virakaramatsu, Minamitsuru-gun Yamanashi 401-0511 (JP)
(74) Representative: Schmidt, Steffen J.

(56) References cited:
- US-A- 6 069 338
- US-A1- 2003 033 052
- US-A1- 2004 026 391
- US-B1- 6 444 942

## Description

The present invention relates to a spot welding system using a robot according to the preamble of claim 1 (see, for example, US- B1-6 444 942).

### Description of the Related Art

A spot welding system using a plurality of robots to perform spot-welding, individually, on a plurality of welding points in a workpiece, such as a vehicle body or the like, has been conventionally known. In this type of spot welding system, an operator instructs welding conditions (such as a welding current, a pressing force, etc.) individually to the robots so as to cause the robots to perform welding operations. After welding has been performed, the operator adjusts the welding conditions for individual robots as occasion demands. In a case where the robots having the same mechanical configuration perform the welding operations on the welding points having the same attributes of workpiece, such as a material, a thickness, etc., using spot welding guns and welding control units of the same type, it is confirmed that a welding result obtained by any one robot under the given welding conditions is good, and thereafter the same welding conditions are instructed to the other robots.

Each of the documents US-B1-6 444 942 and US2004/0026391 A1 describes a welding system comprising a first welding robot, a second welding robot, and a communication line connecting the first and second welding robots with each other so as to permit transmitting welding data therebetween. A control section of the second welding robot causes the second welding robot to perform a welding operation based on the transmitted welding data.

Thus, in the conventional spot welding system, when the robots perform the welding operations for one workpiece (such as a vehicle body), the welding conditions adapted to the respective welding points are instructed to the respective robots and are adjusted individually as occasion demands, so that a significant amount of time has been spent on the setting and adjusting of the welding conditions for the system in its entirety. Also, in a case where the different welding conditions are set for the welding points having the same workpiece attributes, a complicated verification work is required, such as comparing the cycle times of actual welding operations under the respective welding conditions with each other, in order to judge which welding condition is the most suitable.

### SUMMARY OF THE INVENTION

It is an object of the present invention to provide a spot welding system using a robot, which is capable of readily and appropriately setting welding conditions to be instructed individually to a plurality of robots, when the plural robots are used to perform spot-welding individually on a plurality of welding points.

It is another object of the present invention to provide a spot welding system using a robot, which is capable of comparing and evaluating the validity of welding conditions to be instructed individually to a plurality of robots, and capable of instructing the welding conditions having high validity to the respective robots, when the plural robots are used to perform spot-welding individually on a plurality of welding points.

In order to accomplish the above objects, the present invention provides a spot welding system comprising first and second spot welding robots; and a communication line connecting the first and second spot welding robots with each other so as to permit communication therebetween; the first spot welding robot comprising a data transmitting section for transmitting welding data defining welding operations of the first and second spot welding robots through the communication line to the second spot welding robot; and a first control section for causing the first spot welding robot to perform a welding operation based on the welding data; the second spot welding robot comprising a data receiving section for receiving the welding data transmitted from the data transmitting section of the first spot welding robot through the communication line; and a second control section for causing the second spot welding robot to perform a welding operation based on the welding data received by the data receiving section.

In the above spot welding system, the welding data may include welding condition data defining welding conditions under which the first and second spot welding robots perform the welding operations.

The welding data may further include welding definition data defining attributes of welding points of an objective workpiece for which the first and second spot welding robots perform the welding operations, as well as welding configurations of the first and second spot welding robots.

The welding data may further include evaluation data representing a result of the welding operation performed by the first spot welding robot.

### BRIEF DESCRIPTION OF THE DRAWINGS

The above and other objects, features and advantages will become more apparent from the following description of preferred spot welding systems in connection with the accompanying drawings, wherein:
Fig. 1 is a functional block diagram showing the basic configurations of a spot welding system;
Fig. 2A is a functional block diagram showing a first development mode of the spot welding system of Fig. 1;
Fig. 2B is a functional block diagram showing a modification of the spot welding system of Fig. 2A;
Fig. 3A is a functional block diagram showing a second development mode of the spot welding system of Fig. 1;
Fig. 3B is a functional block diagram showing a modification of the spot welding system of Fig. 3A;
Fig. 4A is a functional block diagram showing a third development mode of the spot welding system of Fig. 1;
Fig. 4B is a functional block diagram showing a modification of the spot welding system of Fig. 4A;
Fig. 5 is a functional block diagram showing a fourth development mode of the spot welding system of Fig. 1;
Fig. 6 is a functional block diagram showing a spot welding system according to an embodiment of the present Invention;
Fig. 7 is a flow chart showing an example of a welding-condition adjustment and setting process executed by one robot controller in the spot welding system of Fig. 6;
Fig. 8 is a flow chart showing an example of a welding-condition data renewing process executed at a predetermined period by the other robot controller in the spot welding system of Fig. 6; and
Fig. 9 is a flow chart showing another example of a welding-condition data renewing process executed at a predetermined period by the other robot controller in the spot welding system of Fig. 6.

### DETAILED DESCRIPTION

Spot welding systems according to the technical field of the present invention and embodiments of the present invention are described below in detail, with reference to the accompanying drawings. In the drawings, the same or similar components are denoted by common reference numerals.

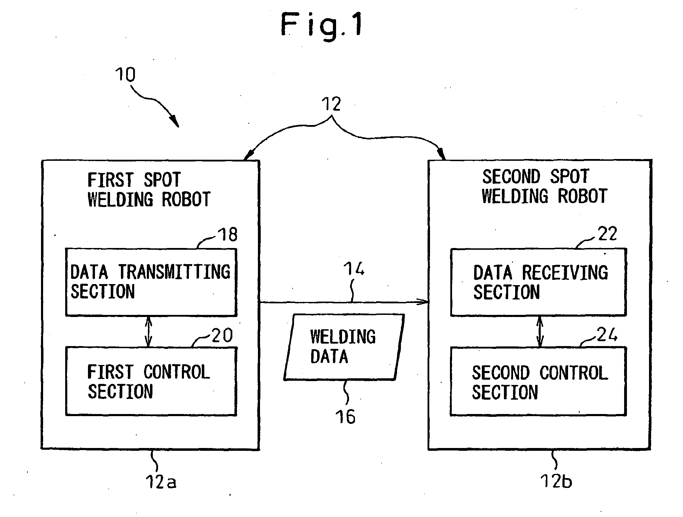

Referring to the drawings, Fig. 1 shows as a functional block diagram the basic configuration of a spot welding system 10 according to the technical field of the present invention. The spot welding system 10 is configured to individually spot-weld a plurality of welding points on a workpiece, such as a vehicle body, by using a plurality of spot welding robots 12. In the spot welding system 10, it is presupposed that, in a case where the spot welding robots 12 have the same welding configuration (the configuration of a spot welding gun, a welding control unit, etc.), common welding conditions should be adopted as the welding conditions (such as a welding current, a pressing force, etc.) under which the spot welding robots 12 perform welding operations, provided that the attributes of workpiece at the welding points to be welded, such as a material, a thickness, etc., are identical to each other. Under this presupposition, when the welding conditions are set or adjusted for any one spot welding robot 12, the contents of the set or adjusted welding conditions are automatically transmitted through communication means to the other spot welding robot 12, so as to be able to readily and appropriately set the welding conditions to be instructed individually to the spot welding robots 12.

The spot welding system 10 Includes first and second spot welding robots 12a, 12b, and a communication line 14 connecting the first and second spot welding robots 12a, 12b with each other so as to permit communication therebetween. The first spot welding robot 12a includes a data transmitting section 18 for transmitting welding data 16 defining welding operations of the first and second spot welding robots 12a, 12b through the communication line 14 to the second spot welding robot 12b, and a first control section 20 for causing the first spot welding robot 12a to perform a welding operation on the basis of the welding data 16. The second spot welding robot 12b includes a data receiving section 22 for receiving the welding data 16 transmitted through the communication line 14 from the data transmitting section 18 of the first spot welding robot 12a, and a second control section 24 for causing the second spot welding robot 12b to perform a welding operation on the basis of the welding data 16 received by the data receiving section 22.

In this configuration, the welding data 16 may include welding condition data (such as a welding current, a pressing force, etc.) defining welding conditions under which the first and second spot welding robots 12a, 12b perform the welding operations.

According to the spot welding system 10 having the above configuration, if the welding data 16 are set or adjusted in the first spot welding robot 12a, the contents of the set or adjusted welding data are automatically transmitted through the communication line 14 to the second spot welding robot 12b, and thereby the first and second spot welding robots 12a, 12b respectively perform the welding operations on the basis of the common welding data 16. In this connection, in a case where the first and second spot welding robots 12a, 12b have the same welding configuration (the configuration of a spot welding gun, a welding control unit, etc.) and the attributes of workpiece at the welding points to be welded, such as a material, a thickness, etc., are identical to each other, it is possible to readily and appropriately set the common welding conditions to be instructed individually to the spot welding robots 12a, 12b, by providing welding condition data for the welding data 16. It should be noted that the spot welding system 10 may include two or more spot welding robots 12, each of these spot welding robots 12 being able to alternatively function as either of the first and second spot welding robots 12a, 12b.

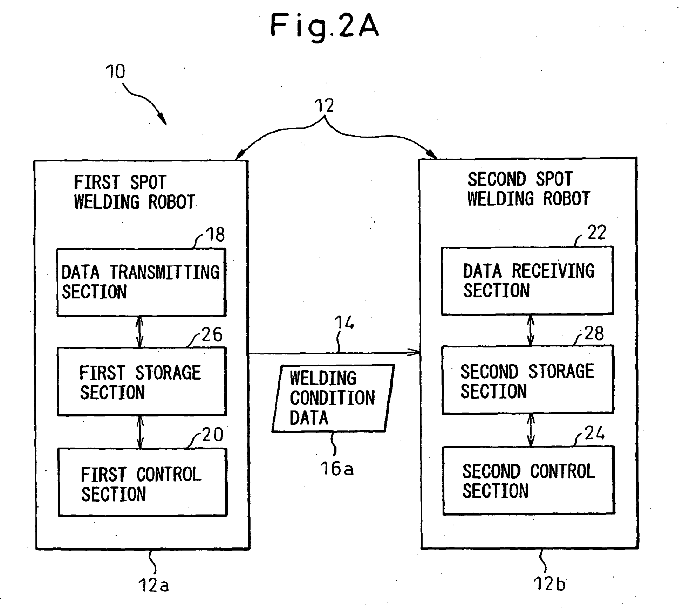

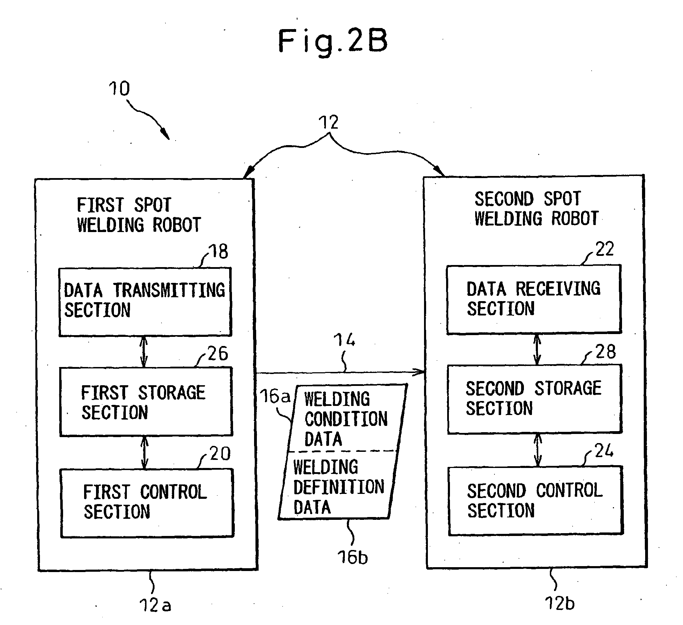

Figs. 2A and 2B show a first development mode (but not covered by the scope of the claims) of the spot welding system 10 having the above basic configuration. In the spot welding system 10 of Fig. 2A, the welding data 16 (Fig. 1) include welding condition data 16a defining the welding conditions under which the first and second spot welding robots 12a, 12b perform the welding operations. The first spot welding robot 12a further includes a first storage section 26 for storing the welding condition data 16a under which the first control section 20 causes the first spot welding robot 12a to properly perform the welding operation. In this arrangement, the data transmitting section 18 transmits the welding condition data 16a stored in the first storage section 26 to the second spot welding robot 12b. The first control section 20 causes the first spot welding robot 12a to perform the welding operation on the basis of the welding condition data 16a stored in the first storage section 26.

On the other hand, the second spot welding robot 12b further includes a second storage section 28 for storing the welding condition data 16a received by the data receiving section 22. In this arrangement, the second control section 24 causes the second spot welding robot 12b to perform the welding operation on the basis of the welding condition data 16a stored in the second storage section 28.

According to the configuration of Fig. 2A, it is possible to cause the first and second spot welding robots 12a, 12b to perform the welding operations repeatedly at required timings on the basis of the common welding condition data 16a.

In the spot welding system 10 of Fig. 2B (not covered by the scope of the claims), the welding data (Fig. 1) further include, in addition to the welding condition data 16a, welding definition data 16b defining the attributes (the material, the thickness, etc.) of the welding points of an objective workpiece for which the first and second spot welding robots 12a, 12b perform the welding operations, as well as the welding configurations (the configurations of welding guns, welding control units, etc.) of the first and second spot welding robots 12a, 12b. The first welding robot 12a further includes a first storage section 26 for storing the welding condition data 16a under which the first control section 20 causes the first spot welding robot 12a to properly perform the welding operation, in a manner as to be associated with the welding definition data 16b. In this arrangement, the data transmitting section 18 transmits the welding condition data 16a and the welding definition data 16b, both stored in the first storage section 26, to the second spot welding robot 12b. The first control section 20 causes the first spot welding robot 12a to perform the welding operation, on the basis of the welding condition data 16a stored in the first storage section 26, on a welding point defined by the welding definition data 16b stored in the first storage section 26.

On the other hand, the second spot welding robot 12b further includes a second storage section 28 for storing the welding condition data 16a and the welding definition data 16b, both received by the data receiving section 22. In this arrangement, the second control section 24 causes the second spot welding robot 12b to perform the welding operation, on the basis of the welding condition data 16a stored in the second storage section 28, on a welding point defined by the welding definition data 16b stored in the second storage section 28.

According to the configuration of Fig. 2B, even when the plural spot welding robots 12 of the spot welding system 10 have various welding configurations, the second spot welding robot 12b can judge itself whether it has the same welding configuration defined by the same welding definition data 16b as those of the first spot welding robot 12a and, when it is judged that the second spot welding robot 12b has the same welding configuration, can perform the welding operation on the basis of the common welding condition data 16a. Similarly, even when the welding points to be welded by the plural spot welding robots 12 have the various attributes of workpiece, the second spot welding robot 12b can judge itself whether the welding point having the same workpiece attributes defined by the same welding definition data 16b as those of the first spot welding robot 12a is provided as an object to be welded and, when it is judged that the welding point having the same attributes is provided as an object to be welded, can perform the welding operation on the basis of the common welding condition data 16a.

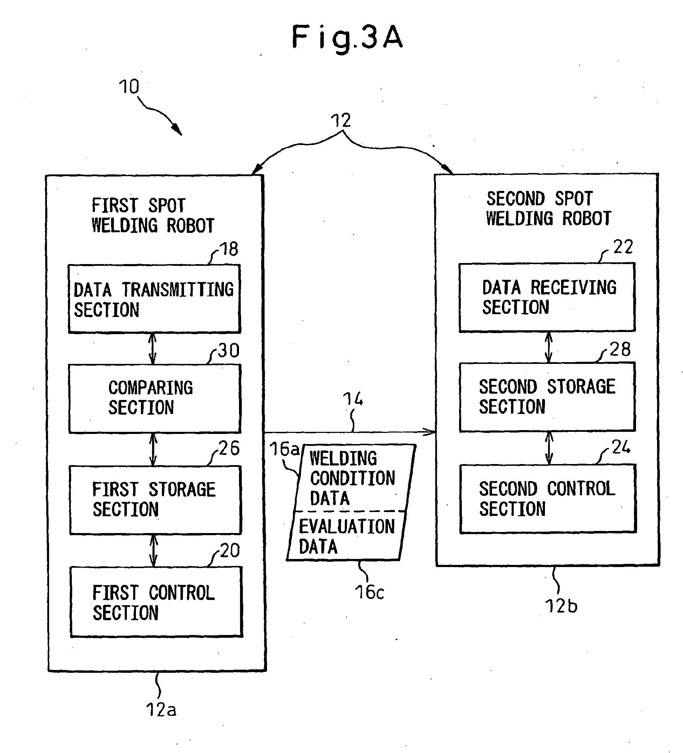

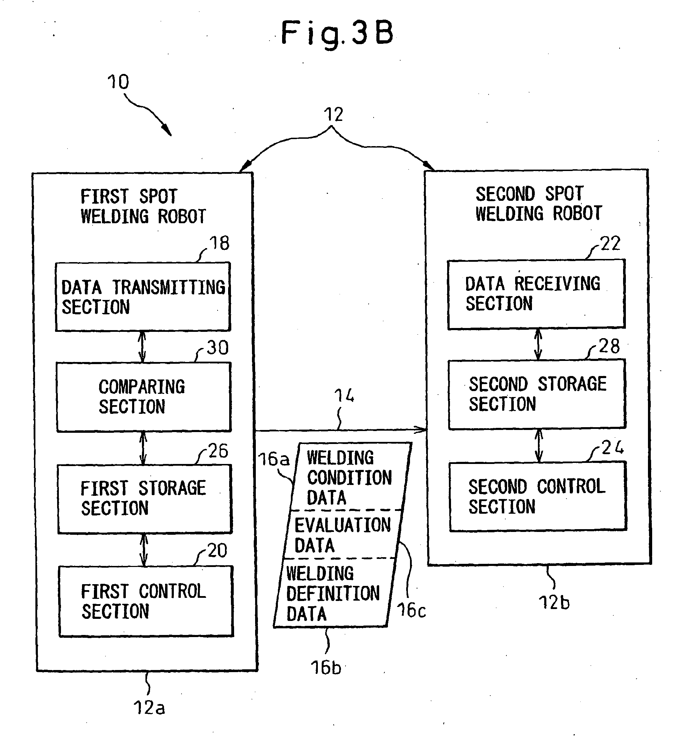

Figs. 3A and 3B show a second development mode of the spot welding system 10 having the above basic configuration, according to the present invention as defined in the claims. In the spot welding system 10 of Fig. 3A, the welding data 16 (Fig. 1) further include, in addition to the welding condition data 16a, evaluation data 16c representing a result of the welding operation performed by the first spot welding robot 12a. The first spot welding robot 12a further includes a comparing section 30 for comparing the evaluation data 16c with each other, the evaluation data 16c being obtained when the first control section 20 causes the first spot welding robot 12a to properly perform, plural times, the welding operation, and a first storage section 26 for storing evaluation data 16c representing a better result, among the evaluation data 16c compared by the comparing section 30, in a manner as to be associated with the welding condition data 16a leading to the better result. In this arrangement, the data transmitting section 18 transmits the welding condition data 16a and the evaluation data 16c, both stored in the first storage section 26, to the second spot welding robot 12b. The first control section 20 causes the first spot welding robot 12a to perform the welding operation on the basis of the welding condition data 16a stored in the first storage section 26.

On the other hand, the second spot welding robot 12b further includes a second storage section 28 for storing the welding condition data 16a and the evaluation data 16c, both received by the data receiving section 22. In this arrangement, the second control section 24 causes the second spot welding robot 12b to perform the welding operation on the basis of the welding condition data 16a stored in the second storage section 28.

According to the configuration of Fig. 3A, it is possible for the first spot welding robot 12a to compare and evaluate, on the basis of the evaluation data 16c in connection with the plural times of welding operations of the first spot welding robot, the validity of the welding condition data 16a in connection with the plural times of welding operations, and also to store more appropriate or valid welding condition data 16a in the first storage section 26 and instruct them to the second spot welding robot 12b. It is also possible to cause the first and second spot welding robots 12a, 12b to perform the welding operations repeatedly at desired timing on the basis of the common and more appropriate welding condition data 16a.

In the spot welding system 10 of Fig. 3B, the welding data 16 (Fig. 1) further include, in addition to the welding condition data 16a and the evaluation data 16c, welding definition data 16b defining the attributes (the material, the thickness, etc.) of the welding points on an objective workpiece for which the first and second spot welding robots 12a, 12b perform the welding operations, as well as the welding configurations (the configurations of welding guns, welding control units, etc.) of the first and second spot welding robots 12a, 12b. The first storage section 26 of the first spot welding robot 12a stores the welding condition data 16a and the evaluation data 16c, associated with each other and obtained by the comparing section 30, in a manner as to be associated with the welding definition data 16b. The data transmitting section 18 transmits the welding condition data 16a, the evaluation data 16c and the welding definition data 16b, stored in the first storage section 26, to the second spot welding robot 12b. The first control section 20 causes the first spot welding robot 12a to perform the welding operation, on the basis of the welding condition data 16a stored in the first storage section 26, on a welding point defined by the welding definition data 16b stored in the first storage section 26.

On the other hand, the second spot welding robot 12b further includes a second storage section 28 for storing the welding condition data 16a, the evaluation data 16c and the welding definition data 16b, received by the data receiving section 22. In this arrangement, the second control section 24 causes the second spot welding robot 12b to perform the welding operation, on the basis of the welding condition data 16a stored in the second storage section 28, on a welding point defined by the welding definition data 16b stored in the second storage section 28.

According to the configuration of Fig. 3B, even when the plural spot welding robots 12 of the spot welding system 10 have various welding configurations, the second spot welding robot 12b can perform the welding operation on the basis of the common and highly appropriate welding condition data 16a, provided that the second spot welding robot 12b has the same welding configuration as that of the first spot welding robot 12a. Similarly, even when the welding points to be welded by the plural spot welding robots 12 have the various attributes of workpiece, the second spot welding robot 12b can perform the welding operation on the basis of the common and highly appropriate welding condition data 16a, provided that the welding point having the same workpiece attributes as that for the first spot welding robot 12a is provided as an object to be welded by the second spot welding robot 12b.

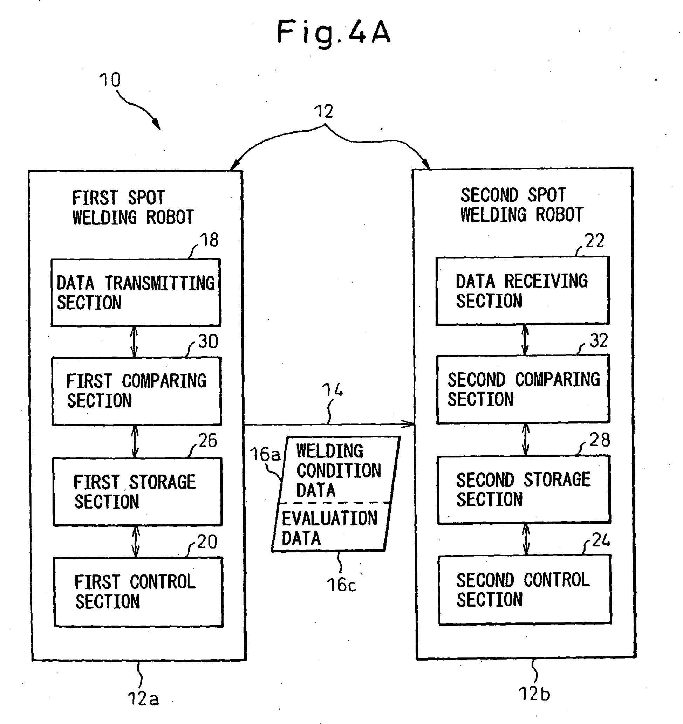

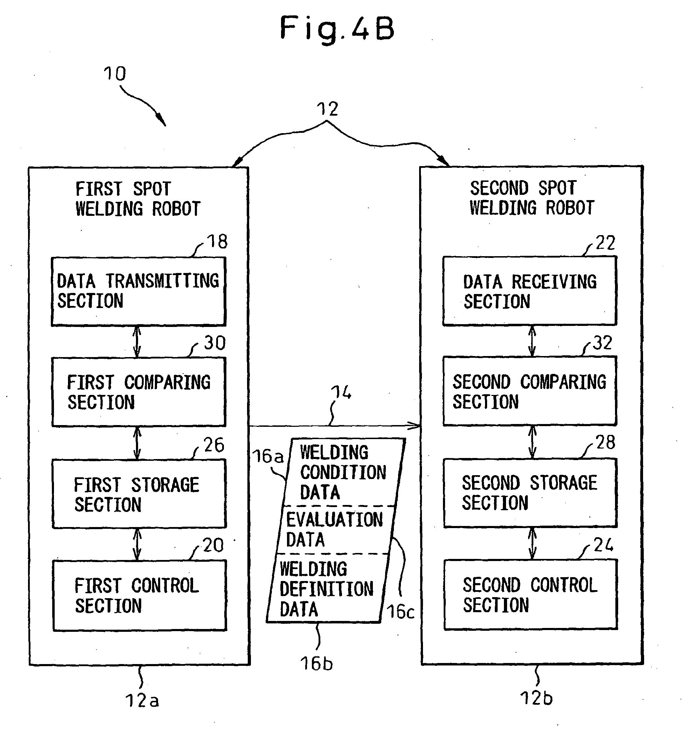

Figs. 4A and 4B show a third development mode of the spot welding system 10 having the above basic configuration according to the present invention as defined in the claims. In the spot welding system 10 of Fig. 4A, the welding data 16 (Fig. 1) further include, in addition to the welding condition data 16a, evaluation data 16c representing a result of the welding operation performed by the first spot welding robot 12a. The first spot welding robot 12a further includes a first comparing section 30 for comparing the evaluation data 16c with each other, the evaluation data being obtained when the first control section 20 causes the first spot welding robot 12a to properly perform, plural times, the welding operation, and a first storage section 26 for storing evaluation data 16c representing a better result, among the evaluation data 16c compared by the first comparing section 30, in a manner as to be associated with the welding condition data 16a leading to the better result. In this arrangement, the data transmitting section 18 transmits the welding condition data 16a and the evaluation data 16c, at a time when the first control section 20 causes the first spot welding robot 12a to properly perform, plural times, the welding operation, to the second spot welding robot 12b. The first control section 20 causes the first spot welding robot 12a to perform the welding operation on the basis of the welding condition data 16a stored in the first storage section 26.

On the other hand, the second spot welding robot 12b further includes a second comparing section 32 for comparing the evaluation data 16c in connection with the plural times of welding operations, received by the data receiving section 22, with each other, and a second storage section 28 for storing evaluation data 16c representing a better result, among the evaluation data 16c compared by the second comparing section 32, in a manner as to be associated with welding condition data 16a leading to the better result, among the welding condition data 16a in connection with the plural times of welding operations. In this arrangement, the second control section 24 causes the second spot welding robot 12b to perform the welding operation on the basis of the welding condition data 16a stored in the second storage section 28.

According to the configuration of Fig. 4A, it is possible for the first spot welding robot 12a to compare and evaluate, on the basis of the evaluation data 16c in connection with the plural times of welding operations of the first spot welding robot, the validity of the welding condition data 16a in connection with the plural times of welding operations, and also to store more appropriate or valid welding condition data 16a in the first storage section 26. On the other hand, it is possible for the second spot welding robot 12b to compare and evaluate, on the basis of the evaluation data 16c in connection with the plural times of welding operations, transmitted from the first spot welding robot, the validity of the welding condition data 16a in connection with the plural times of welding operations, and also to store more appropriate or valid welding condition data 16a in the second storage section 28. It is also possible to cause the first and second spot welding robots 12a, 12b to perform the welding operations repeatedly at desired timing on the basis of the highly appropriate welding condition data 16a.

In the spot welding system 10 of Fig. 4B, the welding data 16 (Fig. 1) further include, in addition to the welding condition data 16a and the evaluation data 16c, welding definition data 16b defining the attributes (the material, the thickness, etc.) of the welding points on an objective workpiece for which the first and second spot welding robots 12a, 12b perform the welding operations, as well as the welding configurations (the configurations of welding guns, welding control units, etc.) of the first and second spot welding robots 12a, 12b. The first storage section 26 of the first spot welding robot 12a stores the welding condition data 16a and the evaluation data 16c, associated with each other and obtained by the first comparing section 30, in a manner as to be associated with the welding definition data 16b. The data transmitting section 18 transmits the welding condition data 16a, the evaluation data 16c and the welding definition data 16b, in connection with the plural times of welding operations, to the second spot welding robot 12b. The first control section 20 causes the first spot welding robot 12a to perform the welding operation, on the basis of the welding condition data 16a stored in the first storage section 26, for a welding point defined by the welding definition data 16b stored in the first storage section 26.

On the other hand, the second spot welding robot 12b further includes a second comparing section 32 for comparing the evaluation data 16c in connection with the plural times of welding operations, received by the data receiving section 22, with each other, and a second storage section 28 for storing evaluation data 16c representing a better result, among the evaluation data 16c compared by the second comparing section 32, in a manner as to be associated with welding condition data 16a and welding definition data 16b, leading to the better result, among the welding condition data 16a and the welding definition data 16b in connection with the plural times of welding operations, received by the data receiving section 22. In this arrangement, the second control section 24 causes the second spot welding robot 12b to perform the welding operation, on the basis of the welding condition data 16a stored in the second storage section 28, for a welding point defined by the welding definition data 16b stored in the second storage section 28.

According to the configuration of Fig. 4B, even when the plural spot welding robots 12 of the spot welding system 10 have various welding configurations, the second spot welding robot 12b can perform the welding operation on the basis of the highly appropriate welding condition data 16a, provided that the second spot welding robot 12b has the same welding configuration as that of the first spot welding robot 12a. Similarly, even when the welding points to be welded by the plural spot welding robots 12 have the various attributes of workpiece, the second spot welding robot 12b can perform the welding operation on the basis of the highly appropriate welding condition data 16a, provided that the welding point having the same workpiece attributes as that for the first spot welding robot 12a is provided as an object to be welded by the second spot welding robot 12b.

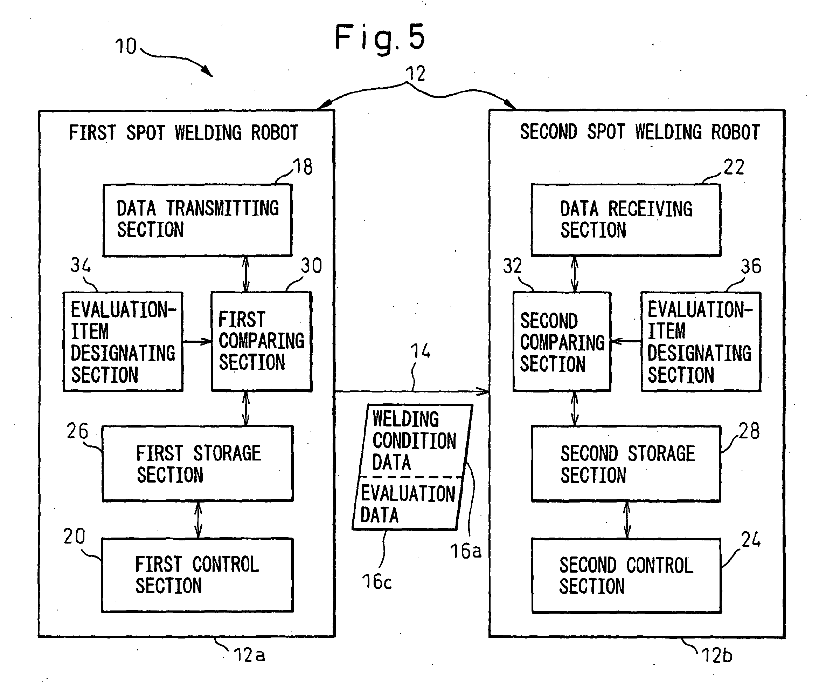

Fig. 5 shows a fourth development mode of the spot welding system 10 having the above basic configuration according to the present invention as defined in the claims, which is a modification of the spot welding system 10 of Fig. 4A. In the spot welding system 10 of Fig. 5, each of the plural evaluation data 16c in connection with said plural times of welding operations contains data regarding a plurality of evaluation items (a cycle time, a pressure application period, a nugget diameter, etc.). The first spot welding robot 12a further includes an evaluation-item designating section 34 for selecting and designating an evaluation item among the plural evaluation items of each of the plural evaluation data 16c compared by the first comparing section 30. Similarly, the second spot welding robot 12b further includes an evaluation-item designating section 36 for selecting and designating an evaluation item among the plural evaluation items of each of the plural evaluation data 16c compared by the second comparing section 32.

According to the configuration of Fig. 5, it is possible to suitably select, for each welding point, the evaluation item of the evaluation data 16c, so as to cause the first and second spot welding robots 12a, 12b to perform more appropriate welding operations. Therefore, it is possible to cause each of the first and second spot welding robots 12a, 12b to perform the optimum welding operation in correspondence with the welding point.

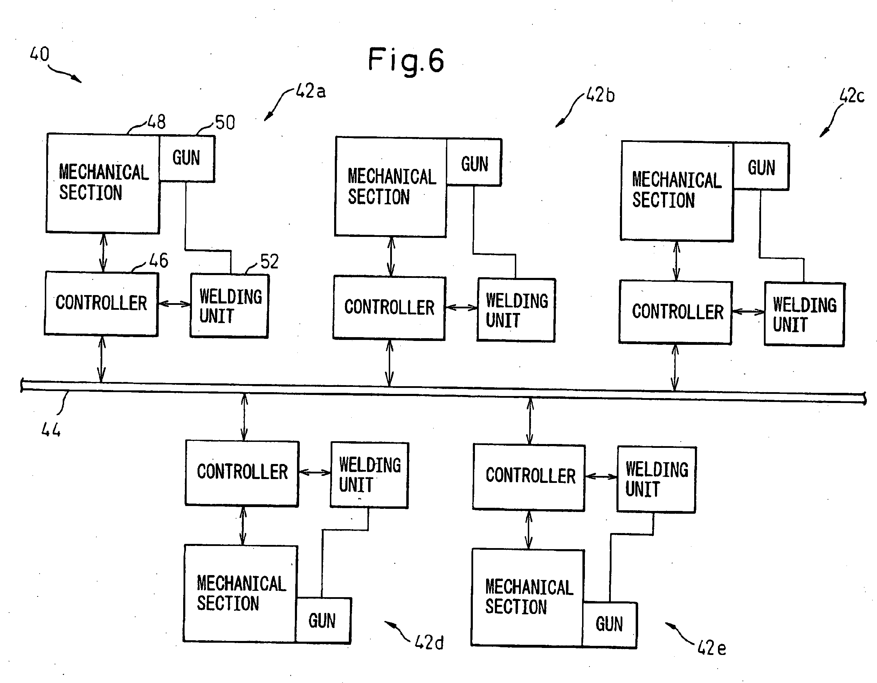

Fig. 6 is a schematic view showing a spot welding system 40, according to an embodiment of the present invention, which embodies the configurations as described in Figures 3A-B, 4A-B and 5.

In the spot welding system 40, a plurality of spot welding robots 42a, 42b, 42c, 42d, 42e (hereinafter simply referred to as robots 42a, 42b, 42c, 42d, 42e) respectively performing spot-welding on a plurality of welding points set on one workpiece, such as a vehicle body, are connected to each other through a communication line 44 forming a part of a communication network, such as Ethernet (trade mark). The robots 42a to 42e have components substantially identical to each other, each of which includes a robot controller 46, a robot mechanical section 48 (hereinafter referred to simply as a mechanical section 48) controlled by the robot controller 46, a spot welding gun 50 mounted to the distal end of the arm of the mechanical section 48, and a welding control unit 52 for controlling the welding operation carried out with the spot welding gun 50. The welding control unit 52 is connected to and is controlled by the robot controller 46.

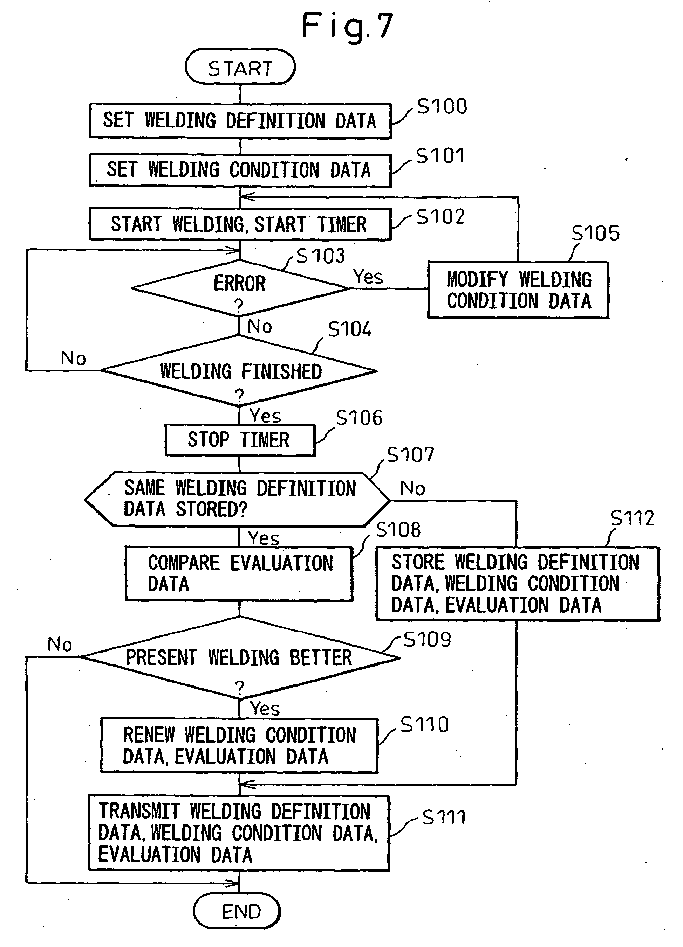

Fig. 7 is a flow chart showing an example of a welding-condition adjustment and setting process executed by the robot controller 46 of any one of robots 42a to 42e.

As already described, in a case where the attributes (the material, the thickness, etc.) of the plural welding points on the workpiece to be spot-welded by the plural robots 42a to 42e are identical to each other, the welding guns 50 and the welding control units 52 of the same type are generally used. In a case where one workpiece includes welding points having different thicknesses and/or materials, the welding guns 50 and the welding control units 52 of different types are mounted respectively to the plural robots 42a to 42e.

The welding condition setting flow as shown in Fig. 7 relates to a configuration in which the plural robots 42a to 42e individually weld a plurality of welding points having mutually different types, and a system configuration for carrying out the illustrated exemplary process corresponds to the configuration shown in Fig. 3B. Thus, any one of the plural robots 42a to 42e constitutes the above-described first spot welding robot 12a, and the robot controller 46 thereof includes a CPU (not shown) having the function of the above-described data transmitting section 18, first control section 20 and comparing section 30, and a memory (not shown) having the function of the above-described first storage section 26. Each of the remaining four robots constitutes the above-described second spot welding robot 12b, and the controller 46 thereof includes a CPU (not shown) having the function of the above-described data receiving section 22 and second control section 24, and a memory (not shown) having the function of the above-described second storage section 28.

First, welding definition data for specifying a welded object and welding means are set (step S100). The welding definition data include data of the materials and thicknesses of the welding points as well as data of the types of the spot welding gun 50 and the welding control unit 52. In a case where the attributes (the material and thickness) of the welding points on a workpiece, such as a vehicle body, are identical to each other, data of the material and thickness of the welding points may be omitted. Also, in a case where the plural robots 42a to 42e use the spot welding guns 50 and the welding control units 52 of the same type, data of the types of the spot welding gun 50 and the welding control unit 52 may be omitted.

Next, welding condition data are set (step S101). The welding condition data include data of a pressing force (kgf), a pushing amount of a spot welding tip (mm), a welding condition number of the welding control unit 52 for identifying a welding current and an energizing time, a welding path for spot-welding one welding point (including a relative position, a speed, a positioning format, an acceleration time constant, a condition of a pass command, etc.), a teaching position (including an error from an off-line teaching position), a thickness error of an actual workpiece (mm), and so on.

After the welding definition data and the welding condition data have been set, the robot is instructed to start spot-welding, and a timer is reset and started to measure a cycle time for the spot-welding of a single operation (step S102). The welding control unit 52 controls the welding current and energizing time on the basis of the set welding condition number, and the robot controller 46 controls the mechanical section 48 on the basis of the set welding condition data to perform a welding operation. Then, the CPU of the robot controller 46 judges whether an error signal is generated (step S103), and judges whether the welding process is completed (step S104). If an error is generated, the generation of error is displayed on, e.g., a display unit, so as to urge an operator to correct the welding condition data. After the operator has corrected the welding condition data (step S105), the process returns to step S102 to execute again the spot-welding.

If no error signal is generated and the welding has been completed, the measurement of time with the timer is stopped (step S106). Then, it is judged whether welding definition data identical to those set at step S100 has already been stored in the memory (step S107). If the welding definition data has not already been stored, the welding definition data and the welding condition data, respectively set at steps S100 and S101, are stored in the memory, and the cycle time obtained at step S106 as a result of measurement with the timer is also stored in the memory as evaluation data (step S112), and thereafter the process proceeds to step S111.

On the other hand, if it is judged that the welding definition data identical to those set at step S100 have already been stored in the memory of the robot controller 46, evaluation data (i.e., a cycle time), that have already been stored in the memory in a manner as to be associated with the welding definition data, are read out and compared with the cycle time obtained at step S106 and relating to a present welding cycle (step S108). If the cycle time of the present welding cycle is shorter (i.e., better), the welding condition data and the cycle time, previously stored in the memory in association with the welding definition data, are rewritten and renewed to the welding condition data set at step S101 and to the cycle time obtained at step S106, respectively. Thus, the welding condition data, associated to the shorter cycle time as the evaluation data, are newly stored. Then, the process proceeds to step S111, and the welding definition data, welding condition data and cycle time, stored at step S112, or the welding condition data and cycle time, renewed at step S110, and the associated welding definition data, are transmitted to the robot controller of the other robots. Each of the other robots receives and stores these transmitted data, as will be described later.

If, at step S109, it is judged that the cycle time of the present welding cycle is longer (i.e., worse), steps S110 and S111 are not executed, and the process flow is terminated. Thus, in connection with the mutually identical welding definition data, the welding condition data, associated to the shorter cycle time as the evaluation data, are stored in the respective robots.

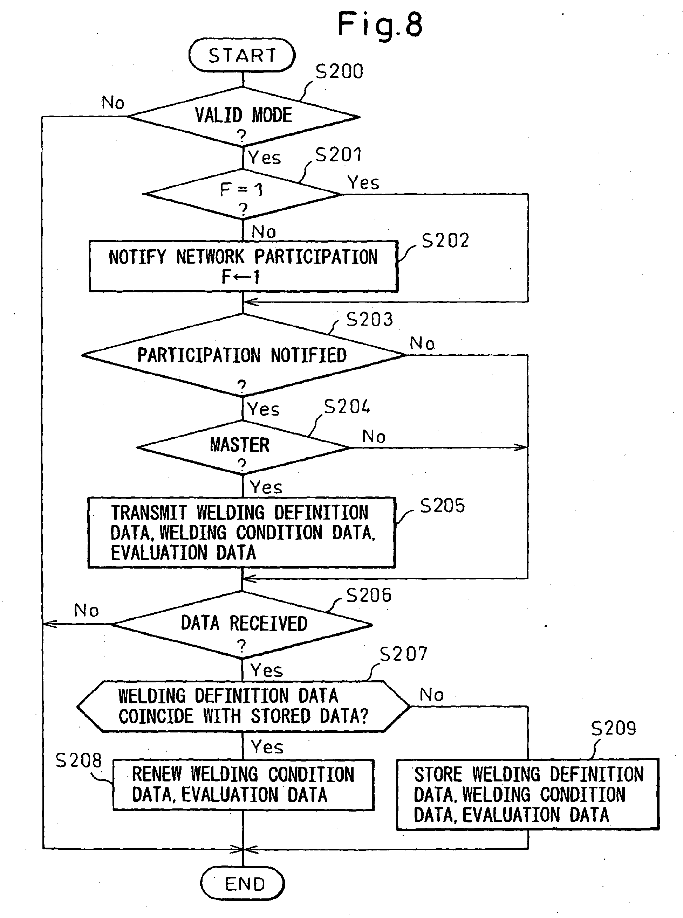

Fig. 8 is a flow chart showing an example of a welding-condition renewing process executed at a predetermined period by the other robot controller 46, subsequent to the welding-condition adjustment and setting process, as described above, executed by one robot controller 46.

First, it is judged whether the robot controller 46 is set to a valid mode in which a process of renewing the welding condition data is valid (step S200). If the valid mode has not been set, this process flow is terminated. On the other hand, if the valid mode has been set, it is judged whether a flag F showing participation to the network is set to "1" (step S201). If the robot controller 46 is connected to the communication line 44 as a first time, the flag F is not set to "1" and, therefore, the process proceeds to step S202. At step S202, the notice of participation to the network is transmitted to all the robot controllers 46 connected to the communication line 44, and the flag F is set to "1" and, thereafter, the process proceeds to step S203. If, at step S201, it is judged that the flag F is set to "1", the process proceeds directly to step S203 without executing step S202.

At step S203, it is judged whether the notice of participation to the network has been received from the other robot, and if no notice has been received, the process proceeds to step S206. If the notice has been received, it is then judged whether the robot controller 46 itself is set as a master controller (step S204). In the system 40, any one of the plural robot controllers 46 connected to the communication line 44 may be set as the master controller, and, for example, the robot controller 46 connected to the communication line 44 at the earliest timing may be set as the master controller. If the setting as the master has not been performed, the process proceeds to step S206. If the setting as the master has been performed, the process proceeds to step S205, where all the welding definition data, the welding condition data and the evaluation data (or the cycle time), stored in the memory, are transmitted to the other robot controllers 46 which have output the notice of participation to the network, and thereafter the process proceeds to step S206.

At step S206, it is judged whether the welding definition data, the welding condition data and the evaluation data have been received from the other robot, and if these data have not been received, the process flow in this period is terminated at this stage. If these data have been received, it is judged whether data coinciding with the received welding definition data exist in data previously stored in the memory (step S207). If no coinciding data exists (e.g., at the first-time connection to the network, the welding definition data are not stored in the memory), the welding definition data, the welding condition data and the evaluation data (or the cycle time) as received are stored in the memory (step S209), and then the process flow in this period is terminated.

On the other hand, if it is judged that the data coinciding with the received welding definition data exist in the data previously stored in the memory, the welding condition data and the evaluation data, associated with the welding definition data, are rewritten and renewed to the welding condition data and the evaluation data as received (step S208), and the process flow for this period is terminated.

In this manner, when the robot controller 46 is connected to the communication line 44 as a first time, the common welding definition data, the welding condition data and the evaluation data stored in the other robot controller already connected to the communication line are stored in the memory of the robot controller 46, and thereby the content of the memory becomes the same as that of the other robot controller 46. As, at step S111 of Fig. 7, the various data are transmitted to the other robot controllers 46 only when the evaluation data for the present welding cycle are better than those stored previously, it is possible, in the respective robot controllers 46, to renew the welding condition data and the evaluation data, associated with the received welding definition data, to more appropriate ones, at step S208 of Fig. 8. Therefore, in all the robot controllers 46 connected to the communication line 44, the welding condition data leading the superior evaluation data at the present time are always stored in association with the welding definition data.

For example, in a case where the pushing amount, as one of the welding conditions, is altered in any one robot, and even if the time required to reach a target pressing force is shortened and the cycle time is thereby reduced, it is difficult for the operator to directly recognize the reduction in cycle time. In the above-described embodiment, however, the robot controller 46 automatically recognizes the reduction in cycle time by the comparison of the evaluation data, and transmits the welding condition data leading the superior evaluation data to the other robots, so that all the robots can perform the welding operation under this welding condition and the overall operational efficiency of the spot welding system 40 can be thereby improved. Further, as the welding condition data become uniform, the variation of cycle times in the respective robots can be eliminated, and precision in estimation of the cycle time in an off-line programming system can be improved.

Each robot controller 46 specifies the welding condition data in connection with the welding operation to be performed in itself, on the basis of the designated welding definition data, and controls the welding control unit 52 to perform the spot-welding on the basis of the specified welding condition data.

In the above-described first exemplary process, the plural robots 42a to 42e connected to the communication line 44 perform the respective welding operations on the basis of the welding definition data different from each other, and the system is configured such that any one robot controller 46 transmits the set welding definition data and the associated welding condition data and evaluation data to the other robot controllers 46, and that each of the other robot controllers 46 stores the received welding definition data, the welding condition data and the evaluation data. In contrast to this, in a case where all the plural robots 42a to 42e connected to the communication line 44 perform the welding operations on the basis of the identical welding definition data, the setting and transmission steps of the welding definition data in the first robot can be omitted as follows.

In a case where the plural welding points set on one workpiece, such as a vehicle body, are of identical material and thickness, the welding definition data for all robots 42a to 42e are identical to each other, provided that the robots 42a to 42e connected to the communication line 44 are equipped with the welding guns 50 and the welding control units 52 of the same type, and thereby the setting and transmission steps of the welding definition data in the above-described process flow become unnecessary. Thus, this second exemplary process is embodied by modifying the process flow of Fig. 7 in such a manner that step S100 is omitted, the judgment at step S107 is changed to the judgment as to whether the welding condition data are stored in the memory, the storage at step S112 is changed to the storage of the welding condition data and the evaluation data, and the transmission at step S111 is changed to the transmission of the welding condition data and the evaluation data. The other steps are the same as those in the first exemplary process.

As for the process flow of Fig. 8, the transmission at step S205 is changed to the transmission of the welding condition data and the evaluation data, the judgment at step S207 is changed to the judgment as to whether the welding condition data are stored in the memory, and the storage at step S209 is changed to the storage of the welding condition data and evaluation data as received. The other steps are the same as those in the first exemplary process. The system configuration for carrying out the second exemplary process corresponds to the configuration shown in Fig. 3A.

Although, in the above-described first and second exemplary processes, the evaluation data are used to evaluate the validity of the welding conditions, the evaluation may be omitted, and thus the welding condition data (and the welding definition data, if any), under which one robot has completed the welding operation with no error, may be transmitted to the other robots. Thus, if the plural robots 42a to 42e connected to the communication line 44 are operated on the basis of the identical welding definition data, a skilled operator familiar with the setting know-how may operate the robot controllers to transmit the welding condition data obtained by one robot through the communication line 44 to, and make these date stored into, all other robots. The quality and the operational efficiency of the system as a whole can be thereby improved.

This third exemplary process is embodied by modifying the process flow of Fig. 7 in such a manner that step S100 is omitted, the time-measurements at steps S102 and S106 are omitted, and, if it is judged that the welding has been finished at step S104, the acts at steps S107 to S111 are changed to the storage of the welding condition data and the transmission of the welding condition data to all other robot controllers. As for the process flow of Fig. 8, the transmission at step S205 is changed to the transmission of the welding condition data, and the acts at steps S207 to S209 are changed to the renewal and storage of the welding condition data as received. The system configuration for carrying out the third exemplary process corresponds to the configuration shown in Fig. 2A.

In a case where the validity of the welding condition is not evaluated and the plural robots 42a to 42e perform the welding operations on the basis of the different welding definition data (i.e., the fourth exemplary process), the welding condition data and the welding definition data, under which any one robot has completed the welding operation with no error, may be transmitted to the other robots. In this arrangement, the process flow of Fig. 7 is modified in such a manner that the time-measurements at steps S102 and S106 are omitted, the comparisons at steps S108 and S109 are omitted, the process proceeds to step S110 if it is judged to be "YES" at step S107, the process proceeds to step S112 (but the evaluation data are not stored) if it is judged to be "NO" at step S107, and the transmission at step S111 is changed to the transmission of the welding definition data and the welding condition data. As for the process flow of Fig. 8, the acts regarding the evaluation data at steps S205, S208 and S209 are omitted. The system configuration for carrying out the fourth exemplary process corresponds to the configuration shown in Fig. 2B.

In the third and fourth exemplary processes, when the welding condition data are set in a robot for which certain welding definition data have been set, the same welding condition data are automatically set to the other robot for which the same welding definition data have been set. Therefore, the welding conditions can be set readily and easily.

In each of the above-described exemplary processes, the system is configured such that various data, such as the welding condition data, the evaluation data, the welding definition data, etc., are automatically transmitted from one robot controller 46 to the other robot controllers 46. In place of the automatic transmission, however, the system may be configured such that various data and a message asking whether the data should be transmitted are displayed on a display (not shown) provided for the robot controller, and only when the operator enters a transmission command, the data are transmitted to the other robots.

The evaluation item of the evaluation data adopted in the above-described first and second exemplary processes is the cycle time measured with a timer, which is a time required for a robot to move from an approach position, do a welding under pressure, and move to a return position, in relation to one welding point. The other evaluation items include a pressurizing time, a travel time, a nugget diameter of spot-welding, and the like. The data of the pressurizing time can be obtained by measuring, in the robot controller 46, a time required from the start of a pressure application to the achievement of a target pressing force, and the data of the travel time can be obtained by subtracting the pressurizing time and energizing time from the cycle time, both of which can be automatically obtained during the welding operation in a way similar to the cycle time. In contrast, as for the measurement of the nugget diameter, it is advantageous that an operator conducts it manually and enters the obtained data to the robot controller 46, because the provision of automatic measurement means leads to increase in cost.

The measurement of the nugget diameter can be carried out using an ultrasonic sensor, a vibration sensor or an infrared camera. In this arrangement, the entry of the nugget diameter measured by the operator is waited at step S106. Then, the comparison and judgment at steps S108 and S109 may be executed on the basis of the entered value of the measured nugget diameter.

In this connection, in the spot welding system 40, there may be a case where it is preferred that different welding evaluation items be adopted for different welding points, i.e., for the respective robots 42a to 42e. For example, even when the evaluation in terms of the nugget diameter is preferred for one welding point, the evaluation in terms of the other items, such as the cycle time or pressurizing time, may be preferred for the other welding point. Therefore, the system may be configured such that it is possible for an operator to select and designate, for each robot, an evaluation item to be used to evaluate the welding result, among the above-described various evaluation items (i.e., the fifth exemplary process).

In this fifth exemplary process, the cycle time, the pressurizing time and the travel time are automatically measured, while the nugget diameter measured by the operator is entered, as the various evaluation data. In this arrangement, the process flow of Fig. 7 is modified in such a manner that the pressurizing time is measured in addition to the cycle time, and at the time when the welding has been finished with no error and the timer is stopped, the data of the cycle time, the pressurizing time and the travel time calculated therefrom are obtained. At this time, a message urging the measurement of the nugget diameter is displayed on a screen, and the entry of the measured nugget diameter is waited. After the measured nugget diameter is entered and the various evaluation data are obtained, the welding definition data, the welding condition data and the various evaluation data are transmitted to the other robots. Thus, in place of the act at step S111 of Fig. 7, a step is conducted before step S107, at which the welding definition data, the welding condition data and the various evaluation data are transmitted to the other robots. In this fifth processing exemplary process, the various evaluation data regarding the evaluation items, such as the cycle time, the pressurizing time, the travel time, the nugget diameter, etc., as measured, are transmitted to the other robots.

Then, at step S107, if it is judged that the same welding definition data are not previously stored in the memory, the process proceeds to step S112, where the welding definition data and the welding condition data are stored in the memory and, in association with them, the various evaluation data are also stored in the memory. At steps S108 and S109, the evaluation data are compared and examined, with respect to the evaluation item designated for the robot. If the evaluation data with respect to the designated evaluation item are better for the present welding cycle, the welding condition data stored in association with the welding definition data are renewed to the welding condition data for the present welding cycle, and the stored evaluation data are rewritten to the present evaluation data, and the process flow is terminated.

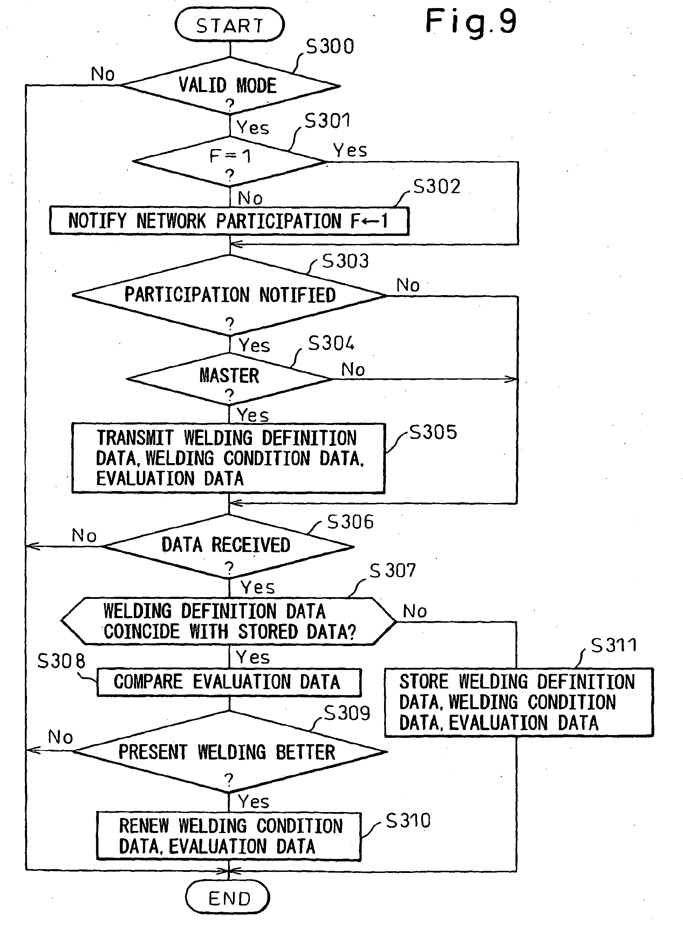

The renewing or rewriting process of the welding condition data, conducted at a predetermined period by the other robot controller 46 in the fifth exemplary process, is executed in accordance with the flow chart shown in Fig. 9. In this connection, the system configuration for carrying out the fifth exemplary process corresponds to the configuration shown in Fig. 5, and the robot controller 46 of any one of the plural robots 42a to 42e includes a CPU (not shown) having the function of the evaluation-item designating section 34 or 36.

In the processing flow of Fig. 9, steps S300 to S307 are identical to step S200 to S207 of the process flow of Fig. 8. If it is judged that, at step S307, data coinciding with the received welding definition data do not exist in data previously stored in the memory of the robot, the welding definition data, the welding condition data and the various evaluation data as received are stored in the memory at step S311.

On the other hand, if the data coinciding with the received welding definition data are previously stored in the memory, evaluation data regarding the evaluation item designated for the robot are selected and read out from the various evaluation data previously stored in the memory in a manner as to be associated with the welding definition data, while evaluation data regarding the designated evaluation item are selected from the various evaluation data as received, and then these selected evaluation data are compared with each other (step S308). Then, it is judged whether the evaluation data for the present welding cycle is better (step S309). If the evaluation data for the present welding cycle is better, the welding condition data and the various evaluation data, stored in the memory in association with the received welding definition data, are rewritten and renewed to the welding condition data and various evaluation data as received (step S310). If the evaluation data for the present welding cycle is not better, the act at step S310 is not executed, and data are not renewed.

In each of the above-described exemplary processes, the system configuration is one in which the plural robots individually perform the spot-welding on the plural welding points on one workpiece, such as a vehicle body. The present invention, however, is not limited to the welding configuration for one workpiece, but may be applied to the system configuration in which plural robots connected to a communication line perform a spot-welding for the plural types of wokpieces.

In any case, according to the present invention as defined in the appended claims, in a spot welding system using robots, it is possible, when a plurality of robots are used to perform a spot-welding on a plurality of welding points, to readily, efficiently and appropriately set welding conditions to be instructed to the respective robots. Further, it is possible to compare and evaluate the validity of the welding conditions instructed to the respective robots, and thus to instruct more appropriate welding conditions to the respective robots.

While the invention has been described with reference to specific preferred embodiments, it will be understood by those skilled in the art that various changes and modifications may be made thereto without departing from the scope of the following claims.

## Claims

1. A spot welding system (10; 40) comprising:
first and second spot welding robots (12a, 12b; 42a, 42b, 42c, 42d, 42e); and
a communication line (14; 44) connecting said first and second spot welding robots (12a, 12b; 42a, 42b, 42c, 42d, 42e) with each other so as to permit communication therebetween;
said first spot welding robot (12a) comprising:
a data transmitting section (18) for transmitting welding data (16) defining welding operations of said first and second spot welding robots (12a, 12b; 42a, 42b, 42c, 42d, 42e) through said communication line (14, 44) to said second spot welding robot (12b); and
a first control section (20) for causing said first spot welding robot (12a) to perform a welding operation based on said welding data (16);
said second spot welding robot (12b) comprising:
a data receiving section (22) for receiving said welding data (16) transmitted from said data transmitting section (18) of said first spot welding robot (12a) through said communication line (14); and
a second control section (24) for causing said second spot welding robot (12b) to perform a welding operation based on said welding data (16) received by said data receiving section (22);
**characterized in that** said welding data (16) include welding condition data (16a) and evaluation data (16c) representing a result of said welding operation performed by said first spot welding robot (12a),
wherein said first spot welding robot (12a) further comprises a comparing section (30) for comparing said evaluation data (16c) with each other, said evaluation data (16c) being obtained when said first control section (20) causes said first spot welding robot (12a) to properly perform, plural times, said welding operation, and a first storage section (26) for storing evaluation data (16c) representing a better result, among said evaluation data (16c) compared by said comparing section (30), in a manner as to be associated with said welding condition data (16a) leading to said better result; wherein said data transmitting section (18) transmits said welding condition data (16a) and said evaluation data (16c), stored in said first storage section (26), to said second spot welding robot (12b); and wherein said first control section (20) causes said first spot welding robot (12a) to perform said welding operation based on said welding condition data (16a) stored in said first storage section (12b),
wherein said second spot welding robot (12b) further comprises a second storage section (28) for storing said welding condition data (16a) and said evaluation data (16c), received by said data receiving section (22); and wherein said second control section (29) causes said second spot welding robot (12b) to perform said welding operation based on said welding condition data (16a) stored in said second storage section (28).

2. The spot welding system as set forth in claim 1, wherein said welding condition data (16a) defines welding conditions under which said first and second spot welding robots (12a, 12b) perform said welding operations.

3. The spot welding system as set forth in claim 2, wherein said first spot welding robot further comprises a first storage section (26) for storing said welding condition data under which said first control section causes said first spot welding robot to properly perform said welding operation; wherein said data transmitting section transmits said welding condition data stored in said first storage section to said second spot welding robot; and wherein said first control section causes said first spot welding robot to perform said welding operation based on said welding condition data stored in said first storage section.

4. The spot welding system as set forth in claim 3, wherein said second spot welding robot further comprises a second storage section (28) for storing said welding condition data received by said data receiving section; and wherein said second control section causes said second spot welding robot to perform said welding operation based on said welding condition data stored in said second storage section.

5. The spot welding system as set forth in claim 2, wherein said welding data further include welding definition data (16b) defining attributes of welding points of an objective workpiece for which said first and second spot welding robots perform said welding operations, as well as welding configurations of said first and second spot welding robots.

6. The spot welding system as set forth in claim 5, wherein said first spot welding robot further comprises a first storage section (26) for storing said welding condition data under which said first control section causes said first spot welding robot to properly perform said welding operation, in a manner as to be associated with said welding definition data; wherein said data transmitting section transmits said welding condition data and said welding definition data, stored in said first storage section, to said second spot welding robot; and wherein said first control section causes said first spot welding robot to perform said welding operation, based on said welding condition data stored in said first storage section, for a welding point defined by said welding definition data stored in said first storage section.

7. The spot welding system as set forth in claim 6, wherein said second spot welding robot further comprises a second storage section (28) for storing said welding condition data and said welding definition data, received by said data receiving section; and wherein said second control section causes said second spot welding robot to perform said welding operation, based on said welding condition data stored in said second storage section, for a welding point defined by said welding definition data stored in said second storage section.

8. The spot welding system as set forth in claim 1, wherein said welding data further include welding definition data (16b) defining attributes of welding points of an objective workpiece for which said first and second spot welding robots perform said welding operations, as well as welding configurations of said first and second spot welding robots; wherein said first storage section of said first spot welding robot stores said welding condition data and said evaluation data, associated with each other and obtained by said comparing section, in a manner as to be associated with said welding definition data; wherein said data transmission section transmits said welding condition data, said evaluation data and said welding definition data, stored in said first storage section, to said second spot welding robot; and wherein said first control section causes said first spot welding robot to perform said welding operation, based on said welding condition data stored in said first storage section, for a welding point defined by said welding definition data stored in said first storage section.

9. The spot welding system as set forth in claim 8, wherein said second spot welding robot further comprises a second storage section (28) for storing said welding condition data, said evaluation data and said welding definition data, received by said data receiving section; and wherein said second control section causes said second spot welding robot to perform said welding operation, based on said welding condition data stored in said second storage section, for a welding point defined by said welding definition data stored in said second storage section.

10. The spot welding system as set forth in claim 1, wherein said first spot welding robot further comprises a first comparing section (30) for comparing said evaluation data with each other, said evaluation data being obtained when said first control section causes said first spot welding robot to properly perform, plural times, said welding operation, and a first storage section (26) for storing evaluation data representing a better result, among said evaluation data compared by said first comparing section, in a manner as to be associated with said welding condition data leading to said better result; wherein said data transmitting section transmits said welding condition data and said evaluation data, at a time when said first control section causes said first spot welding robot to properly perform, plural times, said welding operation, to said second spot welding robot; and wherein said first control section causes said first spot welding robot to perform said welding operation based on said welding condition data stored in said first storage section.

11. The spot welding system as set forth in claim 10, wherein each of said evaluation data in connection with said plural times of welding operations comprises data regarding a plurality of evaluation items; and wherein said first spot welding robot further comprises an evaluation-item designating section (34) for selecting and designating an evaluation item among said plurality of evaluation items of each of said evaluation data compared by said first comparing section.

12. The spot welding system as set forth in claim 10, wherein said second spot welding robot further comprises a second comparing section (32) for comparing said evaluation data in connection with said plural times of welding operations, received by said data receiving section, with each other, and a second storage section (28) for storing evaluation data representing a better result, among said evaluation data compared by said second comparing section, in a manner as to be associated with welding condition data leading to said better result, among said welding condition data in connection with said plural times of welding operations, received by said data receiving section; and wherein said second control section causes said second spot welding robot to perform said welding operation based on said welding condition data stored in said second storage section.

13. The spot welding system as set forth in claim 12, therein each of said evaluation data in connection with said plural times of welding operations comprises data regarding a plurality of evaluation items; and wherein said second spot welding robot further comprises an evaluation-item designating section (36) for selecting and designating an evaluation item among said plurality of evaluation items of each of said evaluation data compared by said second comparing section.

14. The spot welding system as set forth in claim 10, wherein said welding data further include welding definition data (16b) defining attributes of welding points of an objective workpiece for which said first and second spot welding robots perform said welding operations, as well as welding configurations of said first and second spot welding robots; wherein said first storage section of said first spot welding robot stores said welding condition data and said evaluation data, associated with each other and obtained by said first comparing section, in a manner as to be associated with said welding definition data; wherein said data transmitting section transmits said welding condition data, said evaluation data and said welding definition data, in connection with said plural times of welding operations, to said second spot welding robot; and wherein said first control section causes said first spot welding robot to perform said welding operation, based on said welding condition data stored in said first storage section, for a welding point defined by said welding definition data stored in said first storage section.

15. The spot welding system as set forth in claim 14, wherein said second spot welding robot further comprises a second comparing section (32) for comparing said evaluation data in connection with said plural times of welding operations, received by said data receiving section, with each other, and a second storage section (28) for storing evaluation data representing a better result, among said evaluation data compared by said second comparing section, in a manner as to be associated with welding condition data and welding definition data, leading to said better result, among said welding condition data and said welding definition data in connection with said plural times of welding operations, received by said data receiving section; and wherein said second control section causes said second spot welding robot to perform said welding operation, based on said welding condition data stored in said second storage section, for a welding point defined by said welding definition data stored in said second storage section.

16. The spot welding system as set forth in any one of claims 1 to 15, wherein said system comprises a plurality of spot welding robots (42a, 42b, 42c, 42d, 42e), each of said plurality of spot welding robots being able to alternatively function as either one of said first and second spot welding robots.

## Patentansprüche

1. Punktschweißeinrichtung (10; 40) umfassend:
erste und zweite Punktschweißroboter (12a, 12b; 42a, 42b, 42c, 42d, 42e); und
eine Datenübertragungsverbindung (14; 44), die die ersten und zweiten Punktschweißroboter (12a, 12b; 42a, 42b, 42c, 42d, 42e) miteinander so verbindet, dass sie Kommunikation zwischen diesen zulässt;
wobei der erste Punktschweißroboter (12a) umfasst:
einen Datenübertragungsabschnitt (18) zum Übertragen von Schweißdaten (16), die Schweißarbeitsgänge der ersten und zweiten Punktschweißroboter (12a, 12b; 42a, 42b, 42c, 42d, 42e) definieren, über die Datenübertragungsverbindung (14, 44) zu dem zweiten Punktschweißroboter (12b); und
einen ersten Steuerabschnitt (20), um den ersten Punktschweißroboter (12a) zu veranlassen einen Schweißarbeitsgang basierend auf den Schweißdaten (16) auszuführen;
wobei der zweite Punktschweißroboter (12b) umfasst:
einen Datenempfangsabschnitt (22) zum Empfangen der von dem Datenübertragungsabschnitt (18) des ersten Punktschweißroboters (12a) über die Datenübertragungsverbindung (14) übertragenen Schweißdaten (16); und
einen zweiten Steuerabschnitt (24), um den zweiten Punktschweißroboter (12b) zu veranlassen einen Schweißarbeitsgang basierend auf den von dem Datenempfangsabschnitt (22) empfangenen Schweißdaten (16) auszuführen:
**dadurch gekennzeichnet, dass** die Schweißdaten (16) Angaben (16a) über Schweißbedingungen und Evaluierungsdaten (16c) enthalten, die ein Ergebnis des von dem ersten Punktschweißroboter (12a) ausgeführten Schweißarbeitsgangs repräsentieren,
wobei der erste Punktschweißroboter (12a) zudem einen Vergleichsabschnitt (30) umfasst, um die Evaluierungsdaten (16c), die erfasst werden, wenn der erste Steuerabschnitt (20) den ersten Punktschweißroboter (12a) veranlasst den Schweißarbeitsgang mehrmals genau auszuführen, miteinander zu vergleichen, und einen ersten Speicherabschnitt (26) zum Speichern der Evaluierungsdaten (16c), die unter den von dem Vergleichsabschnitt (30) verglichenen Evaluierungsdaten (16c) ein besseres Ergebnis repräsentieren, derart, dass sie mit den Angaben (16a) über Schweißbedingungen, die zu dem besseren Ergebnis führen, assoziiert werden; wobei der Datenübertragungsabschnitt (18) die Angaben (16a) über Schweißbedingungen und die Evaluierungsdaten (16c), die in dem ersten Speicherabschnitt (26) gespeichert sind, an den zweiten Punktschweißroboter (12b) überträgt; und wobei der erste Steuerabschnitt (20) den ersten Punktschweißroboter (12a) veranlasst den Schweißarbeitsgang basierend auf den in dem ersten Speicherabschnitt (26) gespeicherten Angaben (16a) über Schweißbedingungen auszuführen, wobei der zweite Punktschweißroboter (12b) zudem einen zweiten Speicherabschnitt (28) zum Speichern der Angaben (16a) über Schweißbedingungen und der Evaluierungsdaten (16c), die von dem Datenempfangsabschnitt (22) empfangen wurden, umfasst; und wobei der zweite Steuerabschnitt (24) den zweiten Punktschweißroboter (12b) veranlasst den Schweißarbeitsgang basierend auf den in dem zweiten Speicherabschnitt (28) gespeicherten Angaben (16a) über Schweißbedingungen auszuführen.

2. Punktschweißeinrichtung nach Anspruch 1, wobei die Angaben (16a) über Schweißbedingungen Schweißbedingungen definieren, unter welchen die ersten und zweiten Punktschweißroboter (12a, 12b) die Schweißarbeitsgänge ausführen.

3. Punktschweißeinrichtung nach Anspruch 2, wobei der erste Punktschweißroboter zudem einen ersten Speicherabschnitt (26) zum Speichern der Angaben über Schweißbedingungen, unter welchen der erste Steuerabschnitt den ersten Punktschweißroboter veranlasst den Schweißarbeitsgang genau auszuführen, umfasst; wobei der Datenübertragungsabschnitt die in dem ersten Speicherabschnitt gespeicherten Angaben über Schweißbedingungen an den zweiten Punktschweißroboter überträgt; und wobei der erste Steuerabschnitt den ersten Punktschweißroboter veranlasst den Schweißarbeitsgang basierend auf den in dem ersten Speicherabschnitt gespeicherten Angaben über Schweißbedingungen auszuführen.

4. Punktschweißeinrichtung nach Anspruch 3, wobei der zweite Punktschweißroboter zudem einen zweiten Speicherabschnitt (28) zum Speichern der von dem Datenempfangsabschnitt empfangenen Angaben über Schweißbedingungen umfasst; und wobei der zweite Steuerabschnitt den zweiten Punktschweißroboter veranlasst den Schweißarbeitsgang basierend auf den in dem zweiten Speicherabschnitt gespeicherten Angaben über Schweißbedingungen auszuführen.

5. Punktschweißeinrichtung nach Anspruch 2, wobei die Schweißdaten zudem Schweißdefinitionsdaten (16b), die Attribute von Schweißstellen eines Zielwerkstücks definieren, für welches die ersten und zweiten Punktschweißroboter die Schweißarbeitsgänge ausführen, sowie Schweißkonfigurationen der ersten und zweiten Punktschweißroboter enthalten.

6. Punktschweißeinrichtung nach Anspruch 5, wobei der erste Punktschweißroboter zudem einen ersten Speicherabschnitt (26) zum Speichern der Angaben über Schweißbedingungen, unter welchen der erste Steuerabschnitt den ersten Punktschweißroboter veranlasst den Schweißarbeitsgang genau auszuführen, derart, dass sie mit den Schweißdefinitionsdaten assoziiert werden, umfasst; wobei der Datenübertragungsabschnitt die Angaben über Schweißbedingungen und die Schweißdefinitionsdaten, die in dem ersten Speicherabschnitt gespeichert sind, an den zweiten Punktschweißroboter überträgt; und wobei der erste Steuerabschnitt den ersten Punktschweißroboter veranlasst den Schweißarbeitsgang basierend auf den in dem ersten Speicherabschnitt gespeicherten Angaben über Schweißbedingungen für eine durch die in dem ersten Speicherabschnitt gespeicherten Schweißdefinitionsdaten definierte Schweißstelle auszuführen.

7. Punktschweißeinrichtung nach Anspruch 6, wobei der zweite Punktschweißroboter zudem einen zweiten Speicherabschnitt (28) zum Speichern der Angaben über Schweißbedingungen und der Schweißdefinitionsdaten, die von dem Datenempfangsabschnitt empfangen wurden, umfasst; und wobei der zweite Steuerabschnitt den zweiten Punktschweißroboter veranlasst den Schweißarbeitsgang basierend auf den in dem zweiten Speicherabschnitt gespeicherten Angaben über Schweißbedingungen für eine durch die in dem zweiten Speicherabschnitt gespeicherten Schweißdefinitionsdaten definierte Schweißstelle auszuführen.

8. Punktschweißeinrichtung nach Anspruch 1, wobei die Schweißdaten zudem Schweißdefinitionsdaten (16b), die Attribute von Schweißstellen eines Zielwerkstücks definieren, für welches die ersten und zweiten Punktschweißroboter die Schweißarbeitsgänge ausführen, sowie Schweißkonfigurationen der ersten und zweiten Punktschweißroboter enthalten; wobei der erste Speicherabschnitt des ersten Punktschweißroboters die Angaben über Schweißbedingungen und die Evaluierungsdaten, die miteinander assoziiert und von dem Vergleichsabschnitt erfasst werden, derart speichert, dass sie mit den Schweißdefinitionsdaten assoziiert werden; wobei der Datenübertragungsabschnitt die Angaben über Schweißbedingungen, die Evaluierungsdaten und die Schweißdefinitionsdaten, die in dem ersten Speicherabschnitt gespeichert sind, an den zweiten Punktschweißroboter überträgt; und wobei der erste Steuerabschnitt den ersten Punktschweißroboter veranlasst den Schweißarbeitsgang basierend auf den in dem ersten Speicherabschnitt gespeicherten Angaben über Schweißbedingungen für eine durch die in dem ersten Speicherabschnitt gespeicherten Schweißdefinitionsdaten definierte Schweißstelle auszuführen.

9. Punktschweißeinrichtung nach Anspruch 8, wobei der zweite Punktschweißroboter zudem einen zweiten Speicherabschnitt (28) zum Speichern der von dem Datenempfangsabschnitt empfangenen Angaben über Schweißbedingungen, Evaluierungsdaten und Schweißdefinitionsdaten umfasst; und wobei der zweite Steuerabschnitt den zweiten Punktschweißroboter veranlasst den Schweißarbeitsgang basierend auf den in dem zweiten Speicherabschnitt gespeicherten Angaben über Schweißbedingungen für eine durch die in dem zweiten Speicherabschnitt gespeicherten Schweißdefinitionsdaten definierte Schweißstelle auszuführen.

10. Punktschweißeinrichtung nach Anspruch 1, wobei der erste Punktschweißroboter zudem einen ersten Vergleichsabschnitt (30) umfasst, um die Evaluierungsdaten, die erfasst werden, wenn der erste Steuerabschnitt den ersten Punktschweißroboter veranlasst den Schweißarbeitsgang mehrmals genau auszuführen, miteinander zu vergleichen, und einen ersten Speicherabschnitt (26) zum Speichern der Evaluierungsdaten, die unter den von dem ersten Vergleichsabschnitt verglichenen Evaluierungsdaten ein besseres Ergebnis repräsentieren, derart, dass sie mit den Angaben über Schweißbedingungen, die zu dem besseren Ergebnis führen, assoziiert werden; wobei der Datenübertragungsabschnitt die Angaben über Schweißbedingungen und die Evaluierungsdaten zu einem Zeitpunkt überträgt, in dem der erste Steuerabschnitt den ersten Punktschweißroboter veranlasst den Schweißarbeitsgang mehrmals genau auszuführen; und wobei der erste Steuerabschnitt den ersten Punktschweißroboter veranlasst den Schweißarbeitsgang basierend auf den in dem ersten Speicherabschnitt gespeicherten Angaben über Schweißbedingungen auszuführen.

11. Punktschweißeinrichtung nach Anspruch 10, wobei jede der Evaluierungsdaten in Verbindung mit den mehrmaligen Schweißarbeitsgängen Daten hinsichtlich einer Vielzahl von Evaluierungsgrößen umfasst; und wobei der erste Punktschweißroboter zudem einen Abschnitt (34) zur Bestimmung einer Evaluierungsgröße umfasst, um aus der Vielzahl von Evaluierungsgrößen der durch den zweiten Vergleichsabschnitt verglichenen Evaluierungsdaten eine Evaluierungsgröße auszuwählen und zu bestimmen.

12. Punktschweißeinrichtung nach Anspruch 10, wobei der zweite Punktschweißroboter zudem einen zweiten Vergleichsabschnitt (32) umfasst, um die von dem Datenempfangsabschnitt empfangenen Evaluierungsdaten in Verbindung mit den mehrmaligen Schweißarbeitsgängen miteinander zu vergleichen, und einen zweiten Speicherabschnitt (28) zum Speichern der Evaluierungsdaten, die unter den von dem zweiten Vergleichsabschnitt verglichenen Evaluierungsdaten ein besseres Ergebnis repräsentieren, derart, dass sie unter den von dem Datenempfangsabschnitt empfangenen Angaben über Schweißbedingungen in Verbindung mit den mehrmaligen Schweißarbeitsgängen mit den Angaben über Schweißbedingungen, die zu dem besseren Ergebnis führen, assoziiert werden; und wobei der zweite Steuerabschnitt den zweiten Punktschweißroboter veranlasst den Schweißarbeitsgang basierend auf den in dem zweiten Speicherabschnitt gespeicherten Angaben über Schweißbedingungen auszuführen.

13. Punktschweißeinrichtung nach Anspruch 12, wobei jede der Evaluierungsdaten in Verbindung mit den mehrmaligen Schweißarbeitsgängen Daten hinsichtlich einer Vielzahl von Evaluierungsgrößen umfasst; und wobei der zweite Punktschweißroboter zudem einen Abschnitt (36) zur Bestimmung einer Evaluierungsgröße umfasst, um aus der Vielzahl von Evaluierungsgrößen jeder der durch den zweiten Vergleichsabschnitt verglichenen Evaluierungsdaten eine Evaluierungsgröße auszuwählen und zu bestimmen.

14. Punktschweißeinrichtung nach Anspruch 10, wobei die Schweißdaten zudem Schweißdefinitionsdaten (16b), die Attribute von Schweißstellen eines Zielwerkstücks definieren, für welches die ersten und zweiten Punktschweißroboter die Schweißarbeitsgänge ausführen, sowie Schweißkonfigurationen der ersten und zweiten Punktschweißroboter enthalten; wobei der erste Speicherabschnitt des ersten Punktschweißroboters die Angaben über Schweißbedingungen und die Evaluierungsdaten, die miteinander assoziiert und von dem ersten Vergleichsabschnitt erfasst werden, derart speichert, dass sie mit den Schweißdefinitionsdaten assoziiert werden; wobei der Datenübertragungsabschnitt die Angaben über Schweißbedingungen, die Evaluierungsdaten und die Schweißdefinitionsdaten in Verbindung mit den mehrmaligen Schweißarbeitsgängen an den zweiten Punktschweißroboter überträgt; und wobei der erste Steuerabschnitt den ersten Punktschweißroboter veranlasst den Schweißarbeitsgang basierend auf den in dem ersten Speicherabschnitt gespeicherten Angaben über Schweißbedingungen für eine durch die in dem ersten Speicherabschnitt gespeicherten Schweißdefinitionsdaten definierte Schweißstelle auszuführen.

15. Punktschweißeinrichtung nach Anspruch 14, wobei der zweite Punktschweißroboter zudem einen zweiten Vergleichsabschnitt (32) umfasst, um die von dem Datenempfangsabschnitt empfangenen Evaluierungsdaten in Verbindung mit den mehrmaligen Schweißarbeitsgängen miteinander zu vergleichen, und einen zweiten Speicherabschnitt (28) zum Speichern der Evaluierungsdaten, die unter den von dem zweiten Vergleichsabschnitt verglichenen Evaluierungsdaten ein besseres Ergebnis repräsentieren, derart, dass sie unter den von dem Datenempfangsabschnitt empfangenen Angaben über Schweißbedingungen und Schweißdefinitionsdaten in Verbindung mit den mehrmaligen Schweißarbeitsgängen mit Angaben über Schweißbedingungen und Schweißdefinitionsdaten assoziiert werden, die zu dem besseren Ergebnis führen; und wobei der zweite Steuerabschnitt den zweiten Punktschweißroboter veranlasst die Schweißoperation basierend auf den in dem zweiten Speicherabschnitt gespeicherten Angaben über Schweißbedingungen für eine durch die in dem zweiten Speicherabschnitt gespeicherten Schweißdefinitionsdaten definierte Schweißstelle auszuführen.

16. Punktschweißeinrichtung nach einem der Ansprüche 1 bis 15, wobei die Einrichtung eine Vielzahl von Punktschweißrobotern (42a, 42b, 42c, 42d, 42e) umfasst, wobei jeder aus der Vielzahl der Punktschweißroboter alternativ entweder als einer der ersten oder zweiten Punktschweißroboter arbeiten kann.

## Revendications

1. Système de soudage par points (10 ; 40) comprenant :
un premier et un deuxième robots de soudage par points (12a, 12b ; 42a, 42b, 42c, 42d, 42e) ; et
une ligne de communication (14 ; 44) connectant lesdits premier et deuxième robots de soudage par points (12a, 12b ; 42a, 42b, 42c, 42d, 42e) l'un avec l'autre de manière à permettre une communication entre ceux-ci ;
ledit premier robot de soudage par points (12a) comprenant :
une section de transmission de données (18) pour transmettre des données de soudage (16) définissant des opérations de soudage desdits premier et deuxième robots de soudage par points (12a, 12b ; 42a, 42b, 42c, 42d, 42e) par l'intermédiaire de ladite ligne de communication (14 ; 44) audit deuxième robot de soudage par points (12b) ; et
une première section de commande (20) pour faire que ledit premier robot de soudage par points (12a) effectue une opération de soudage sur la base desdites données de soudage (16) ;
ledit deuxième robot de soudage par points (12b) comprenant :
une section de réception de données (22) pour recevoir lesdites données de soudage (16) transmises par ladite section de transmission de données (18) dudit premier robot de soudage par points (12a) par l'intermédiaire de ladite ligne de communication (14) ; et
une deuxième section de commande (24) pour faire que ledit deuxième robot de soudage par points (12b) effectue une opération de soudage sur la base desdites données de soudage (16) reçues par ladite section de réception de données (22) ;
**caractérisé en ce que** lesdites données de soudage (16) incluent des données de conditions de soudage (16a) et des données d'évaluation (16c) représentant un résultat de ladite opération de soudage effectuée par ledit premier robot de soudage par points (12a),
dans lequel ledit premier robot de soudage par points (12a) comprend en outre une section de comparaison (30) pour comparer lesdites données d'évaluation (16c) les unes avec les autres, lesdites données d'évaluation (16c) étant obtenues lorsque ladite première section de commande (20) fait que ledit premier robot de soudage par points (12a) effectue correctement, plusieurs fois, ladite opération de soudage, et une première section de stockage (26) pour stocker des données d'évaluation (16c) représentant un meilleur résultat, parmi lesdites données d'évaluation (16c) comparées par ladite section de comparaison (30), de manière à être associées avec lesdites données de conditions de soudage (16a) menant audit meilleur résultat ; dans lequel ladite section de transmission de données (18) transmet lesdites données de conditions de soudage (16a) et lesdites données d'évaluation (16c), stockées dans ladite première section de stockage (26), audit deuxième robot de soudage par points (12b) ; et dans lequel ladite première section de commande (20) fait que ledit premier robot de soudage par points (12a) effectue ladite opération de soudage sur la base desdites données de conditions de soudage (16a) stockées dans ladite première section de stockage (26),
dans lequel ledit deuxième robot de soudage par points (12b) comprend en outre une deuxième section de stockage (28) pour stocker lesdites données de conditions de soudage (16a) et lesdites données d'évaluation (16c) reçues par ladite section de réception de données (22), et dans lequel ladite deuxième section de commande (24) fait que le deuxième robot de soudage par points (12b) effectue ladite opération de soudage sur la base desdites données de conditions de soudage (16a) stockées dans ladite deuxième section de stockage (28).

2. Système de soudage par points selon la revendication 1, dans lequel lesdites données de conditions de soudage (16a) définissent les conditions de soudage sous lesquelles lesdits premier et deuxième robots de soudage par points (12a, 12b) effectuent lesdites opérations de soudage.

3. Système de soudage par points selon la revendication 2, dans lequel ledit premier robot de soudage par points comprend en outre une première section de stockage (26) pour stocker lesdites données de conditions de soudage sous lesquelles ladite première section de commande fait que ledit premier robot de soudage par points effectue correctement ladite opération de soudage ; dans lequel ladite section de transmission de données transmet lesdites données de conditions de soudage stockées dans ladite première section de stockage audit deuxième robot de soudage par points ; et dans lequel ladite première section de commande fait que ledit premier robot de soudage par points effectue ladite opération de soudage sur la base desdites données de conditions de soudage stockées dans ladite première section de stockage.

4. Système de soudage par points selon la revendication 3, dans lequel ledit deuxième robot de soudage par points comprend en outre une deuxième section de stockage (28) pour stocker lesdites données de conditions de soudage reçues par ladite section de réception de données ; et dans lequel ladite deuxième section de commande fait que ledit deuxième robot de soudage par points effectue ladite opération de soudage sur la base desdites données de conditions de soudage stockées dans ladite deuxième section de stockage.

5. Système de soudage par points selon la revendication 2, dans lequel lesdites données de soudage incluent en outre des données de définition de soudage (16b) définissant des attributs de points de soudage d'une pièce de travail en question pour laquelle lesdits premier et deuxième robots de soudage par points effectuent lesdites opérations de soudage, ainsi que des configurations de soudage desdits premier et deuxième robots de soudage par points.

6. Système de soudage par points selon la revendication 5, dans lequel ledit premier robot de soudage par points comprend en outre une première section de stockage (26) pour stocker lesdites données de conditions de soudage sous lesquelles ladite première section de commande fait que ledit premier robot de soudage par points effectue correctement ladite opération de soudage, de manière à être associées avec lesdites données de définition de soudage ; dans lequel ladite section de transmission de données transmet lesdites données de conditions de soudage et lesdites données de définition de soudage, stockées dans ladite première section de stockage, audit deuxième robot de soudage par points ; et dans lequel ladite première section de commande fait que le premier robot de soudage par points effectue ladite opération de soudage, sur la base desdites données de conditions de soudage stockées dans ladite première section de stockage, pour un point de soudage défini par lesdites données de définition de soudage stockées dans ladite première section de stockage.

7. Système de soudage par points selon la revendication 6, dans lequel ledit deuxième robot de soudage par points comprend en outre une deuxième section de stockage (28) pour stocker lesdites données de conditions de soudage et lesdites données de définition de soudage, reçues par ladite section de réception de données ; et dans lequel ladite deuxième section de commande fait que ledit deuxième robot de soudage par points effectue ladite opération de soudage, sur la base desdites données de conditions de soudage stockées dans ladite deuxième section de stockage, pour un point de soudage défini par lesdites données de définition de soudage stockées dans ladite deuxième section de stockage.

8. Système de soudage par points selon la revendication 1, dans lequel lesdites données de soudage incluent en outre des données de définition de soudage (16b) définissant des attributs de points de soudage d'une pièce de travail en question pour laquelle lesdits premier et deuxième robots de soudage par points effectuent lesdites opérations de soudage, ainsi que des configurations de soudage desdits premier et deuxième robots de soudage par points ; dans lequel ladite première section de stockage dudit premier robot de soudage par points stocke lesdites données de conditions de soudage et lesdites données d'évaluation, associées les unes avec les autres et obtenues par ladite section de comparaison, de manière à être associées avec lesdites données de définition de soudage ; dans lequel ladite section de transmission de données transmet lesdites données de conditions de soudage, lesdites données d'évaluation et lesdites données de définition de soudage, stockées dans ladite première section de stockage, audit deuxième robot de soudage par points ; et dans lequel ladite première section de commande fait que ledit premier robot de soudage par points effectue ladite opération de soudage, sur la base desdites données de conditions de soudage stockées dans ladite première section de stockage, pour un point de soudage défini par lesdites données de définition de soudage stockées dans ladite première section de stockage.

9. Système de soudage par points selon la revendication 8, dans lequel ledit deuxième robot de soudage par points comprend en outre une deuxième section de stockage (28) pour stocker lesdites données de conditions de soudage, lesdites données d'évaluation et lesdites données de définition de soudage reçues par ladite section de réception de données ; et dans lequel ladite deuxième section de commande fait que ledit deuxième robot de soudage par points effectue ladite opération de soudage, sur la base desdites données de conditions de soudage stockées dans ladite deuxième section de stockage, pour un point de soudage défini par lesdites données de définition de soudage stockées dans ladite deuxième section de stockage.

10. Système de soudage par points selon la revendication 1, dans lequel ledit premier robot de soudage par points comprend en outre une première section de comparaison (30) pour comparer lesdites données d'évaluation les unes avec les autres, lesdites données d'évaluation étant obtenues lorsque ladite première section de commande fait que ledit premier robot de soudage par points effectue correctement, plusieurs fois, ladite opération de soudage, et une première section de stockage (26) pour stocker des données d'évaluation représentant un meilleur résultat, parmi lesdites données d'évaluation comparées par ladite première section de comparaison, de manière à être associées avec lesdites données de conditions de soudage menant audit meilleur résultat ; dans lequel ladite section de transmission de données transmet lesdites données de conditions de soudage et lesdites données d'évaluation, à un moment où ladite première section de commande fait que ledit premier robot de soudage par points effectue correctement, plusieurs fois, ladite opération de soudage, audit deuxième robot de soudage par points ; et dans lequel ladite première section de commande fait que ledit premier robot de soudage par points effectue ladite opération de soudage sur la base desdites données de conditions de soudage stockées dans ladite première section de stockage.

11. Système de soudage par points selon la revendication 10, dans lequel chacune desdites données d'évaluation en connexion avec lesdites plusieurs fois d'opérations de soudage comprennent des données relatives à une pluralité d'éléments d'évaluation ; et dans lequel ledit premier robot de soudage par points comprend en outre une section de désignation d'éléments d'évaluation (34) pour sélectionner et désigner un élément d'évaluation parmi ladite pluralité d'éléments d'évaluation de chacune desdites données d'évaluation comparées par ladite première section de comparaison.

12. Système de soudage par points selon la revendication 10, dans lequel ledit deuxième robot de soudage par points comprend en outre une deuxième section de comparaison (32) pour comparer lesdites données d'évaluation en connexion avec lesdites plusieurs fois d'opérations de soudage, reçues par ladite section de réception de données, les unes avec les autres, et une deuxième section de stockage (28) pour stocker des données d'évaluation représentant un meilleur résultat, parmi lesdites données d'évaluation comparées par ladite deuxième section de comparaison, de manière à être associées avec les données de conditions de soudage menant audit meilleur résultat, parmi lesdites données de conditions de soudage en connexion avec lesdites plusieurs fois d'opérations de soudage, reçues par ladite section de réception de données ; et dans lequel ladite deuxième section de commande fait que ledit deuxième robot de soudage par points effectue ladite opération de soudage sur la base desdites données de conditions de soudage stockées dans ladite deuxième section de stockage.

13. Système de soudage par points selon la revendication 12, dans lequel chacune desdites données d'évaluation en connexion avec lesdites plusieurs fois d'opérations de soudage comprennent des données relatives à une pluralité d'éléments d'évaluation ; et dans lequel ledit deuxième robot de soudage par points comprend en outre une section de désignation d'éléments d'évaluation (36) pour sélectionner et désigner un élément d'évaluation parmi ladite pluralité d'éléments d'évaluation de chacune desdites données d'évaluation comparées par ladite deuxième section de comparaison.

14. Système de soudage par points selon la revendication 10, dans lequel lesdites données de soudage incluent en outre des données de définition de soudage (16b) définissant des attributs de points de soudage d'une pièce de travail en question pour laquelle lesdits premier et deuxième robots de soudage par points effectuent lesdites opérations de soudage, ainsi que des configurations de soudage desdits premier etc deuxième robots de soudage par points ; dans lequel ladite première section de stockage dudit premier robot de soudage par points stocke lesdites données de conditions de soudage et lesdites données d'évaluation, associées les unes avec les autres et obtenues par ladite première section de comparaison, de manière à être associées avec lesdites données de définition de soudage ; dans lequel ladite section de transmission de données transmet lesdites données de conditions de soudage, lesdites données d'évaluation et lesdites données de définition de soudage, en connexion avec lesdites plusieurs fois d'opérations de soudage, audit deuxième robot de soudage par points ; et dans lequel ladite première section de commande fait que ledit premier robot de soudage par points effectue ladite opération de soudage, sur la base desdites données de conditions de soudage stockées dans ladite première section de stockage, pour un point de soudage défini par lesdites données de définition de soudage stockées dans ladite première section de stockage.

15. Système de soudage par points selon la revendication 14, dans lequel ledit deuxième robot de soudage par points comprend en outre une deuxième section de comparaison (32) pour comparer lesdites données d'évaluation en connexion avec lesdites plusieurs fois d'opérations de soudage, reçues par ladite section de réception de données, les unes avec les autres, et une deuxième section de stockage (28) pour stocker des données d'évaluation représentant un meilleur résultat, parmi lesdites données d'évaluation comparées par ladite deuxième section de comparaison, de manière à être associées avec les données de conditions de soudage et lesdites données de définition de soudage, menant audit meilleur résultat, parmi lesdites données de conditions de soudage et lesdites données de définition de soudage en connexion avec lesdites plusieurs fois d'opérations de soudage, reçues par ladite section de réception de données ; et dans lequel ladite deuxième section de commande fait que ledit deuxième robot de soudage par points effectue ladite opération de soudage, sur la base desdites données de conditions de soudage stockées dans ladite deuxième section de stockage, pour un point de soudage défini par lesdites données de définition de soudage stockées dans ladite deuxième section de stockage.

16. Système de soudage par points selon l'une quelconque des revendications 1 à 15, dans lequel ledit système comprend une pluralité de robots de soudage par points (42a, 42b, 42c, 42d, 42e), chacun de ladite pluralité de robots de soudage par points étant apte à fonctionner de manière alternée comme l'un ou l'autre desdits premier et deuxième robots de soudage par points.
